# EUROPEAN PATENT SPECIFICATION

(11) **EP 2 159 718 B1**
(45) Date of publication and mention of the grant of the patent: **11.07.2018**
(21) Application number: 08013072.7
(22) Date of filing: 21.01.2004
(51) Int. Cl.: G06F 17/30, G06F 9/50, G06F 11/14

(54) **Systems for managing data storage**
System zur Datenspeicherungsverwaltung
Système de gestion de stockage de données

(30) Priority: 21.01.2003 US 441810 P; 20.01.2004 US 761884
(43) Date of publication of application: 03.03.2010
(62) Divisional of application: 04704089.4
(73) Proprietor: Dell Products, L.P., Round Rock, TX 78682 (US)
(72) Inventor: Koning, Paul G., New Boston NH 03070 (US); Hayden, Peter C., Mount Vernon NH 03057 (US); Long, Paula, Hollis NH 03049 (US); Lee, Hsin H., Marlborough MA 01752 (US); Suman, Daniel E., Westford MA 01886 (US)
(74) Representative: FRKelly

(56) References cited:
- EP-A- 0 938 046
- WO-A-01/06367
- WO-A-97/24668
- LEVY E ET AL: "Distributed file systems: concepts and examples", ACM COMPUTING SURVEYS, ACM, NEW YORK, NY, US, US, vol. 22, no. 4, 1 December 1990 (1990-12-01), pages 321-374, XP002392825, ISSN: 0360-0300, DOI: 10.1145/98163.98169

## Description

### FIELD OF THE INVENTION

The invention relates to systems and methods for managing data storage in computer networks, and more particularly to systems that store data resources across a plurality of servers and provide backup for data blocks across a plurality of servers.

### BACKGROUND

The client server architecture has been one of the more successful innovations in information technology. The client server architecture allows a plurality of clients to access services and data resources maintained and/or controlled by a server. The server listens for requests from the clients and in response to the request determines whether or not the request can be satisfied, responding to the client as appropriate. A typical example of a client server system has a "file server" set up to store data files and a number of clients that can communicate with the server. Clients typically request that the server grant access to different ones of the data files maintained by the file server. If a data file is available and a client is authorized to access that data file, the server can deliver the requested data file to the server and thereby satisfy the client's request.

Although the client server architecture has worked remarkably well, it does have some drawbacks. For example, the number of clients contacting a server and the number of requests being made by individual clients can vary significantly over time. As such, a server responding to client requests may find itself inundated with a volume of requests that is impossible or nearly impossible to satisfy. To address this problem, network administrators often make sure that the server includes sufficient data processing assets to respond to anticipated peak levels of client requests. Thus, for example, the network administrator may make sure that the server comprises a sufficient number of central processing units (CPUs) with sufficient memory and storage space to handle the volume of client traffic that may arrive.

In addition, during the operation of a mass storage system to periodically gather information about how the data is stored on the system and from time-to-time to make a backup copy of the stored data. Gathering such information can be beneficial for a number of reasons, including for recovery in the event of a non-recoverable failure.

Backing up a mass storage system is typically done by reading the data stored on the mass storage system and writing it to a magnetic tape to create an archive copy of the stored data.

However, generating such archival copies can be burdensome. Many prior art backup methods require that the system be removed from ongoing (online) operations to assure the integrity and consistency of the backup copy. This is because normal backup techniques either copy the blocks from the mass storage system sequentially to a linear-access tape, or walk through the file system on the mass storage system, starting with the first block of the first file in the first directory and proceeding in order to the last block of the last file of the last directory. In either case, the backup process is unaware of updates being performed as data is being written to tape.

Thus, to permit continued, online operations while performing backup operations generates inconsistencies if the data is modified as the backup operation proceeds. Removing the storage system from continued storage operations eliminates the risk of inconsistencies arising during the system operations. However, backup operations can be time consuming therefore making removal of the system from operations undesirable.

One approach to addressing this problem, has been by creating a mirror, or identical copy, of one disk's data. When a backup operation is required, the mirror disk may be used as a static image for a storage. When the static image is no longer necessary (for example, when the tape backup has been completed), the two disks are resynchronized, by copying any changes made during the time mirroring was not active to the mirror disk, and mirroring is resumed.

Although, mirroring works well, it requires that the data stored on the system be captured accurately. Today however, new distributed storage systems are being developed that avoid the use of a centralized storage control system. These distributed systems capture the benefits of the more flexible and scalable distributed server architectures. Although very exciting, these storage systems present challenges that prior art storage systems do not. One such challenge is the ability to generate reliable and trustworthy archive copies of a data volume that has been distributed across a plurality of independently operating servers.

Note that, in this disclosure, the term "resource" is to be understood to encompass, although not be limited to the files, data blocks or pages, applications, or other services or capabilities provided by the server to clients. The term "asset" is to be understood to encompass, although not be limited to the processing hardware, memory, storage devices, and other elements available to the server for the purpose of responding to client requests.

Even with a studied determination of needed system resources, variations in client load can still burden a server or group of servers acting in concert as a system. For example, even if sufficient hardware assets are provided in the server system, it may be the case that client requests focus on a particular file, data block within a file, or other resource maintained by the server. Thus, continuing with the above example, it is not uncommon that client requests overwhelmingly focus on a small portion of the data files maintained by the file server. Accordingly, even though the file server may have sufficient hardware assets to respond to a certain volume of client requests, if these requests are focused on a particular resource, such as a particular data file, most of the file server assets will remain idle while those assets that support the data file being targeted are over-burdened.

To address this problem, network engineers have developed load balancing systems that distribute client requests across the available assets for the purpose of distributing client demand on individual assets. To this end, the load balancing system may distribute client requests in a round-robin fashion that evenly distributes requests across the available server assets. In other practices, the network administrator sets up a replication system that can identify when a particular resource is the subject of a flurry of client requests and duplicate the targeted resource so that more of the server assets are employed in supporting client requests for that resource.

Furthermore, while servers do a good job of storing data, their assets are limited. One common technique employed today to extend server assets is to rely on peripheral storage devices such as tape libraries, RAID disks, and optical storage systems. When properly connected to servers, these storage devices are effective for backing up data online and storing large amounts of information. By connecting a number of such devices to a server, a network administrator can create a "server farm" (comprised of multiple server devices and attached storage devices) that can store a substantial amount of data. Such attached storage devices are collectively referred to as Network Attached Storage (NAS) systems.

But as server farms increase in size, and as companies rely more heavily on data-intensive applications such as multimedia, this traditional storage model is not quite as useful. This is because access to these peripheral devices can be slow, and it is not always possible for every user to easily and transparently access each storage device.

In order to address this shortfall, a number of vendors have been developing an architecture called a Storage Area Network (SAN). SANs provide more options for network storage, including much faster access to NAS-type peripheral devices. SANs further provide flexibility to create separate networks to handle large volumes of data.

A SAN is a high-speed special-purpose network or sub-network that interconnects different kinds of data storage devices with associated data servers on behalf of a larger network of users. Typically, a storage area network is part of the overall network of computing assets of an enterprise. SANs support disk mirroring, backup and restore, archiving, and retrieval of archived data, data migration from one storage device to another, and the sharing of data among different servers in a network. SANs can incorporate sub-networks containing NAS systems.

A SAN is usually clustered in close proximity to other computing resources (such as mainframes) but may also extend to remote locations for backup and archival storage, using wide area networking technologies such as asynchronous transfer mode (ATM) or Synchronous Optical Networks (SONET). A SAN can use existing communication technology such as optical fiber ESCON or Fibre Channel technology to connect storage peripherals and servers.

Although SANs hold much promise, they face a significant challenge. Bluntly, consumers expect a lot of their data storage systems. Specifically, consumers demand that SANs provide network-level scalability, service, and flexibility, while at the same time providing data access at speeds that compete with server farms.

This can be quite a challenge, particularly in multi-server environments, where a client wishing to access specific information or a specific file is redirected to a server that has the piece of the requested information or file. The client then establishes a new connection to the other server upon redirect and severs the connection to the originally contacted server. However, this approach defeats the benefit of maintaining a long-lived connection between the client and the initial server.

Another approach is "storage virtualization" or "storage partitioning" where an intermediary device is placed between the client and a set of physical (or even logical) servers, with the intermediary device providing request routing. None of the servers are aware that it is providing only a portion of the entire partitioned service, nor are any of the clients aware that the data resources are stored across multiple servers. Obviously, adding such an intermediary device adds complexity to the system.

Although the above techniques may work well in certain client server architectures, they each require additional devices or software (or both) disposed between the clients and the server assets to balance loads by coordinating client requests and data movement. As such, this central transaction point can act as a bottleneck that slows the server's response to client requests.

Furthermore, resources must be supplied continuously, in response to client requests, with strictly minimized latency. Accordingly, there is a need in the art for a method for rapidly distributing client load across a server system while at the same time providing suitable response times for incoming client resource requests and preserving a long-lived connection between the client and the initial server. There is also a need in the art for a distributed storage system that can provide reliable snapshots of the data volumes that are being maintained across the different server in the system.

WO97/024668 discloses a backup system that stores a backup image that includes data from at least one Direct Access Storage Device (DASD). DASD devices are direct access storage devices such as a disk drive. Such devices may typically, for example, have a controller which may be a microprocessor and a memory, the memory may hold firmware which is executed by the microprocessor to perform various DASD functions. The firmware may, for example, include read and write logic to map addresses received with a read or write command to a corresponding location on one of the storage devices. The DASD devices thus appear as one large accessible storage area to the hosted CPU rather than a conglomeration of the various storage devices. The single host computer can be arranged to back up logical files and logical disks.

WO 01/006367 is a type of hierarchical backup system. Computing devices connected in a network may be grouped into "backup cells". A backup cell has a manager software agent responsible for initiating a backup regime for the network computing devices in its associated cell. In addition, a manager software agent for a cell may be placed in contact with the manager software agent for another cell. The first software agent may alter the parameters of the second software agent to define a new back up regimen for that second cell. This arrangement also provides for failure in the sense that if a second software agent fails, the first software agent can then direct the back up of the second cell. LEVY E ET AL: "Distributed file systems: concepts and examples",ACM COMPUTING SURVEYS, ACM, NEW YORK, NY, US, US, vol. 22, no. 4, 1 December 1990 (1990-12-01), pages 321-374, discloses a distributed file system to allow users of physically distributed computers to share data and storage resources.

### SUMMARY OF THE INVENTION

The present invention provides a system for providing a partitioned storage service as claimed in claim 1 and a corresponding method according to claim 9.

The systems and methods described herein include systems for managing responses to requests from a plurality of clients for access to a set of resources. In one exemplary implementation the systems comprise a plurality of equivalent servers wherein the set of resources is partitioned across this plurality of servers.

Each equivalent server has a load monitor process that is capable of communicating with the other load monitor processes for generating a measure of the client load on the server system and the client load on each of the respective servers. The system may further comprise a resource distribution process that is responsive to the measured system load and is capable of repartitioning the set of resources to thereby redistribute the client load.

Optionally, the systems may further comprise a client distribution process that is responsive to the measured system load and is capable of repartitioning the set of client connections among the server systems to thereby redistribute the client load.

Accordingly, it will be understood that the systems and methods described herein include client distribution systems that may work with a partitioned service, wherein the partitioned service is supported by a plurality of equivalent servers each of which is responsible for a portion of the service that has been partitioned across the equivalent servers. In one exemplary implementation each equivalent server is capable of monitoring the relative load that each of the clients that server is communicating with is placing on the system and on that particular server. Accordingly, each equivalent server is capable of determining when a particular client would present a relative burden to service. However, for a partitioned service each client is to communicate with that equivalent server that is responsible for the resource of interest of the client. Accordingly, in one exemplary implementation, the systems and methods described herein redistribute client load by, in part, redistributing resources across the plurality of servers.

The systems and methods described herein include server systems that comprise a group of servers that support a service or resource that has been partitioned across the individual servers of the group. In one application, the systems and methods provide a partitioned storage service for providing storage services to a plurality of clients. In this exemplary implementation, a data volume may be partitioned across a plurality of servers, with each server being responsible for a portion of the data volume. In such a partitioned storage system, the storage "volumes" may be understood as analogous to disk drives in a conventional storage system. However, in the partitioned service, the data volumes have been spread over several servers, with each server owning a portion of the data within the volume.

For the purpose of fault tolerance, data back-up, and other benefits, the partitioned storage services described herein provide a storage administrator with a snapshot process and system that creates a copy of the state of the storage volume. Typically, the snapshot process results in the creation of a second storage volume, which acts as an archive of the state of the storage system at a given time. Storage administrators may employ this archive as a recovery tool in the case that the original storage volumes fails at a later time, a backup tool for offline backups, or for any other suitable reason.

In another exemplary implementation, the systems and methods described herein include storage area network systems (SANs) that may be employed for providing storage assets for an enterprise. The SAN comprises a plurality of servers and/or network devices. At least a portion of the servers and network devices include a load monitor process that monitors the client load being placed on the respective server or network device. The load monitor process is further capable of communicating with other load monitor processes operating on the storage area network. Each load monitor process may be capable of generating a system-wide load analysis that indicates the client load being placed on the storage area network. Additionally, the load monitor process may be capable of generating an analysis of the client load being placed on that respective server and/or
network device. Based on the client load information observed by the load monitor process, the storage area network is capable of redistributing client load to achieve greater responsiveness to client requests. To this end, in one exemplary implementation, the storage area network is capable of repartitioning the stored resources in order to redistribute client load. In another exemplary implementation, the storage area network is capable of moving the client connections supported by the system for the purpose of redistributing client load across the storage area network.

### BRIEF DESCRIPTION OF THE DRAWINGS

The foregoing and other objects and advantages of the invention will be appreciated more fully from the following further description thereof, with reference to the accompanying drawings, wherein:
- FIG. 1: depicts schematically the structure of a prior art system for providing access to a resource maintained on a storage area network;
- FIG. 2: presents a functional block diagram of one system according to the invention;
- FIG. 3: presents in more detail the system depicted in FIG. 2;
- FIG. 4: is a schematic diagram of a client server architecture with servers organized in server groups;
- FIG. 5: is a schematic diagram of the server groups as seen by a client;
- FIG. 6: shows details of the information flow between the client and the servers of a group;
- FIG. 7: is a process flow diagram for retrieving resources in a partitioned resource environment;
- FIG. 8: depicts in more detail and as a functional block diagram a first exemplary implementation of a system according to the invention;
- FIG. 9: depicts an example of a routing table suitable for use with the system of FIG. 4;
- FIG. 10: depicts in more detail and as a functional block diagram a second exemplary implementation of a system according to the invention;
- FIG. 11: depicts in more detail and as a functional block diagram a third exemplary implementation of a system according to the invention;
- FIG. 12: depicts one process for generating a snapshot of a storage volume supported by the system of FIG. 1; and
- FIG. 13: depicts an alternate process for generating a snapshot of a storage volume.

The use of the same reference symbols in different drawings indicates similar or identical items.

### DETAILED DESCRIPTION OF THE ILLUSTRATED EXEMPLARY ILLUSTRATIONS

To provide an overall understanding of the invention, certain exemplary implementations will now be described. However, it will be understood by one of ordinary skill in the art that the systems and methods described herein can be adapted and modified to redistribute resources in other applications, such as distributed file systems, database applications, and/or other applications where resources are partitioned or distributed. Moreover, such other additions and modifications fall within the scope of the invention.

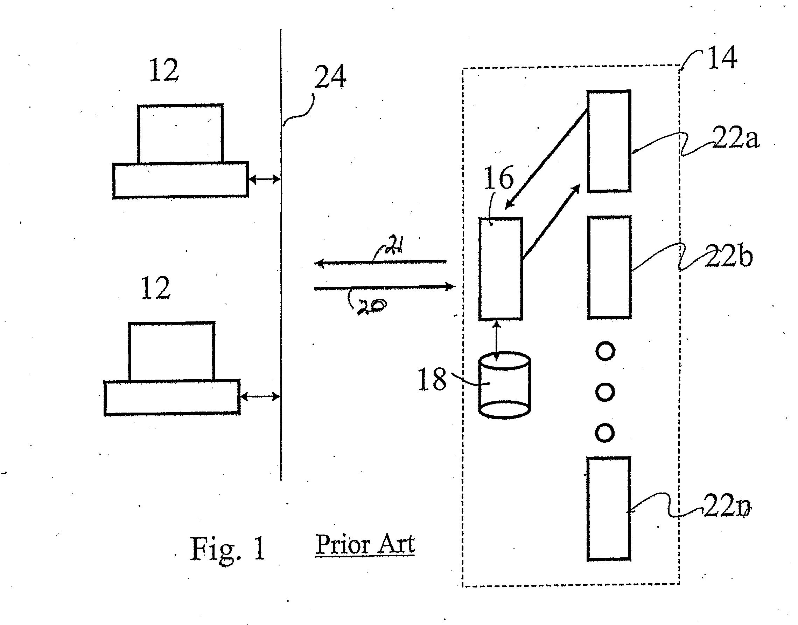

FIG. 1 depicts a prior art network system for supporting requests for resources from a plurality of clients 12 that are communicating across a local area network 24. Specifically, FIG. 1 depicts a plurality of clients 12, a local area network (LAN) 24, and a storage system 14 that includes an intermediary device 16 that processes requests from clients and passes them to servers 22. In one exemplary implementation the intermediary device 16 is a switch. The system also includes a master data table 18, and a plurality of servers 22a-22n. The storage system 14 may provide a storage area network (SAN) that provide storage resources to the clients 12 operating across the LAN 24. As further shown in FIG. 1, each client 12 may make a request 20 for a resource maintained on the SAN 14. Each request 20 is delivered to the switch 16 and processed therein. During processing the clients 12 can request resources across the LAN 24 and the switch 16 employs the master data table 18 to identify which of the plurality of servers 22a through 22n has the resource being requested by the respective client 12.

In FIG. 1, the master data table 18 is depicted as a database system, however in alternative exemplary implementation the switch 16 may employ a flat file master data table that is maintained by the switch 16. In either case, the switch 16 employs the master data table 18 to determine which of the servers 22a through 22n maintains which resources. Accordingly, the master data table 18 acts as an index that lists the different resources maintained by the system 14 and which of the underlying servers 22a through 22n is responsible for which of the resources.

As further depicted by FIG. 1, once the switch 16 determines the appropriate server 22a through 22n for the requested resource, the retrieved resource may be passed from the identified server through the switch 16 and back to the LAN 24 for delivery (represented by arrow 21) to the appropriate client 12. Accordingly, FIG. 1 depicts that system 14 employs the switch 16 as a central gateway through which all requests from the LAN 24 are processed. The consequence of this central gateway architecture is that delivery time of resources requested by clients 12 from system 14 can be relatively long and this delivery time may increase as latency periods grow due to increased demand for resources maintained by system 14.

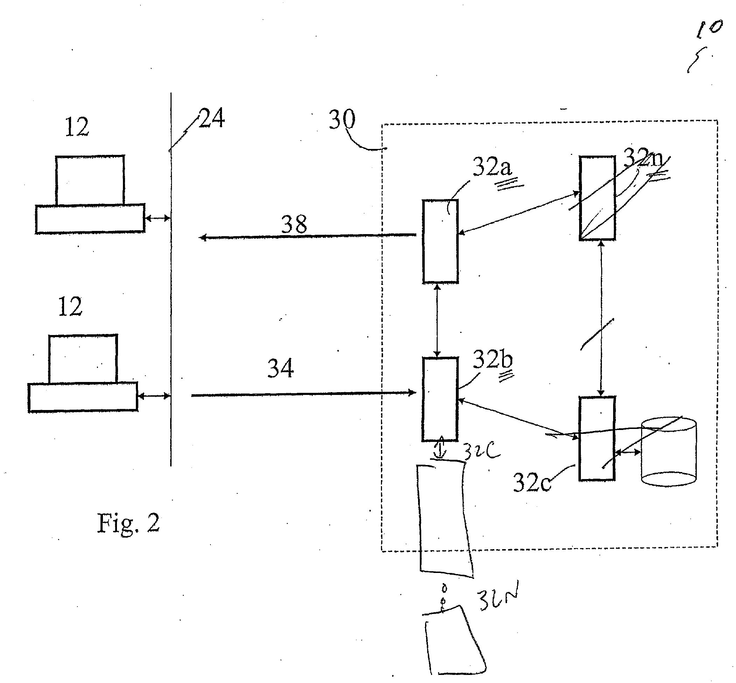

Turning to FIG. 2, a system 10 according to the invention is depicted. Specifically, FIG. 2 depicts a plurality of clients 12, a local area network (LAN) 24, and a server group 30 that includes plurality of servers 32A through 32N. As shown by FIG. 2, the clients 12 communicate across the LAN 24. As further shown in FIG. 2, each client 12 may make a request for a resource maintained by server group 30. In one application, the server group 30 is a storage area network (SAN) that provides network storage resources for clients 12. Accordingly, a client 12 may make a request across the (LAN) 24 that is transmitted, as depicted in FIG. 2 as request 34, to a server, such as the depicted server 32B of the SAN 30.

The depicted SAN 30 comprises a plurality of equivalent servers 32A through 32N. Each of these servers has a separate IP address and thus the system 10 appears as a storage area network that includes a plurality of different IP addresses, each of which may be employed by the clients 12 for accessing storage resources maintained by the SAN 30.

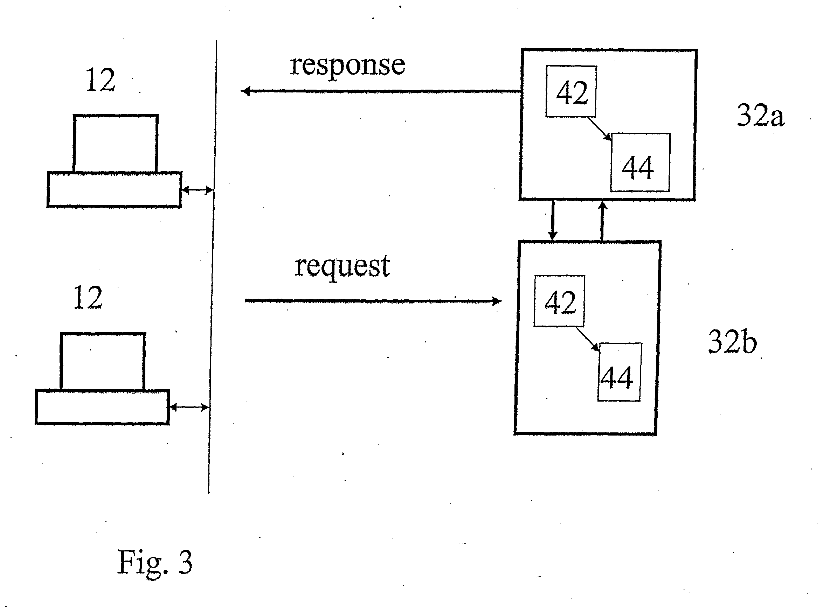

The depicted SAN 30 employs the plurality of servers 32A though 32N to partition resources across the storage area network, forming a partitioned resource set. Thus, each of the individual servers may be responsible for a portion of the resources maintained by the SAN 30. In operation, the client request 34 received by the server 32B is processed by the server 32B to determine the resource of interest to that client 12 and to determine which of the plurality of servers 32A through 32N is responsible for that particular resource. In the example depicted in FIGURES 2 and 3, the SAN 30 determines that the server 32A is responsible for the resource identified in the client request 34. As further shown by FIG. 2, the SAN 30 may optionally employ a system where, rather than have the original server 32B respond to the client request 34, a shortcut response is employed that allows the responsible server to respond directly to the requesting client 12. Server 32A thus delivers response 38 over LAN 24 to the requesting client 12.

As discussed above, the SAN 30 depicted in FIG. 2 comprises a plurality of equivalent servers. Equivalent servers will be understood, although not limited to, server systems that expose a uniform interface to a client or clients, such as the clients 12. This is illustrated in part by FIG. 3 that presents in more detail the system depicted in FIG. 2, and shows that requests from the clients 12 may be handled by the servers, which in the depicted embodiment, return a response to the appropriate client. Each equivalent server will respond in the same manner to a request presented by any client 12, and the client 12 does not need to know which one or ones of the actual servers is handling its request and generating the response. Thus, since each server 32A through 32N presents the same response to any client 12, it is immaterial to the client 12 which of the servers 32A through 32N responds to its request.

Each of the depicted servers 32A through 32N may comprise conventional computer hardware platforms such as one of the commercially available server systems from the Sun Microsystems Inc. of Santa Clara, California. Each server executes one or more software processes for the purpose of implementing the storage area network. The SAN 30 may employ a Fibre Channel network, an arbitrated loop, or any other type of network system suitable for providing a storage area network. As further shown in FIG. 2, each server may maintain its own storage resources or may have one or more additional storage devices coupled to it. These storage devices may include, but are not limited to, RAID systems, tape library systems, disk arrays, or any other device suitable for providing storage resources to the clients 12.

It will be understood that those of ordinary skill in the art that the systems and methods of the invention are not limited to storage area network applications and may be applied to other applications where it may be more efficient for a first server to receive a request and a second server to generate and send a response to that request. Other applications may include distributed file systems, database applications, application service provider applications, or any other application that may benefit from this technique.

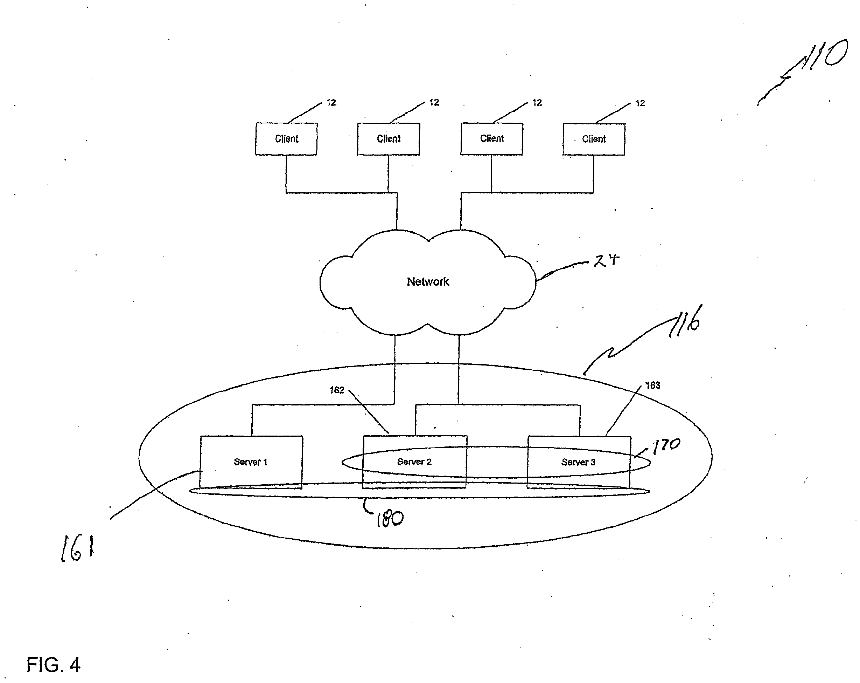

Referring now to FIG. 4, one or several clients 12 are connected, for example via a network 24, such as the Internet, an intranet, a WAN or LAN, or by direct connection, to servers 161, 162, and 163 that are part of a server group 116.

As described above, the depicted clients 12 can be any suitable computer system such as a PC workstation, a handheld computing device, a wireless communication device, or any other such device, equipped with a network client program capable of accessing and interacting with the server group 116 to exchange information with the server group 116.

Servers 161, 162 and 163 employed by the system 110 may be conventional, commercially available server hardware platforms, as described above. However any suitable data processing platform may be employed. Moreover, it will be understood that one or more of the servers 161, 162, or 163 may comprise a network storage device, such as a tape library, or other device, that is networked with the other servers and clients through network 24.

Each server 161, 162, and 163 may include software components for carrying out the operation and the transactions described herein, and the software architecture of the servers 161, 162, and 163 may vary according to the application. In certain exemplary implementations, the servers 161, 162, and 163 may employ a software architecture that builds certain of the processes described below into the server's operating system, into device drivers, into application level programs, or into a software process that operates on a peripheral device (such as a tape library, RAID storage system, or another storage device or any combination thereof). In any case, it will be understood by those of ordinary skill in the art that the systems and methods described herein may be realized through many different exemplary implementations and that the particular exemplary implementation and practice employed will vary as a function of the application of interest. All these exemplary implementations and practices accordingly fall within the scope of the present invention.

In operation, the clients 12 will have need of the resources partitioned across the server group 116. Accordingly, each of the clients 12 will send requests to the server group 116. The clients 12 typically act independently, and as such, the client load placed on the server group 116 will vary over time. In a typical operation, a client 12 will contact one of the servers, for example server 161, to access a resource, such as a data block, page (comprising a plurality of blocks), file, database table, application, or other resource. The contacted server 161 itself may not hold or have control over the requested resource. However, in a preferred exemplary implementation, the server group 116 is configured to make all the partitioned resources available to the client 12 regardless of the server that initially receives the request. For illustration, FIG. 4 shows two resources, one resource 180 that is partitioned over all three servers (servers 161, 162, 163) and another resource 170 that is partitioned over two of the three servers. In the exemplary application of the system 110 being a block data storage system, each resource 170 and 180 may represent a partitioned block data volume.

The depicted server group 116 therefore provides a block data storage service that may operate as a storage area network (SAN) comprised of a plurality of equivalent servers, servers 161, 162, and 163. Each of the servers 161, 162, and 163 may support one or more portions of the partitioned block data volumes 170 and 180. In the depicted server group 116, there are two data resources (e.g., volumes) and three servers; however there is no specific limit on the number of servers. Similarly, there is no specific limit on the number of resources or data volumes. Moreover, each resource may be contained entirely on a single server, or it may be partitioned over several servers, either all of the servers in the server group, or a subset of the server group.

In practice, there may of course be limits due to implementation considerations, for example the amount of memory assets available in the servers 161, 162 and 163 or the computational limitations of the servers 161, 162 and 163. Moreover, the grouping itself, i.e., deciding which servers will comprise a group, may in one practice involve an administrative decision. In a typical scenario, a group might at first contain only a few servers, perhaps only one. The system administrator would add servers to a group as needed to obtain the level of performance required. Increasing servers creates more space (memory, disk storage) for resources that are stored, more CPU processing capacity to act on the client requests, and more network capacity (network interfaces) to carry the requests and responses from and to the clients. It will be appreciated by those of skill in the art that the systems described herein are readily scaled to address increased client demands by adding additional servers into the group 116. However, as client load varies, the server group 116 can redistribute client load to take better advantage of the available assets in server group 116.

To this end, the server group 116, in one exemplary implementation, comprises a plurality of equivalent servers. Each equivalent server supports a portion of the resources partitioned over the server group 116. As client requests are delivered to the equivalent servers, the equivalent servers coordinate among themselves to generate a measure of system load and to generate a measure of the client load of each of the equivalent servers. In a preferred practice, this coordinating is transparent to the clients 12, and the servers can distribute the load among each other without causing the clients to alternate or change the way they access a resource..

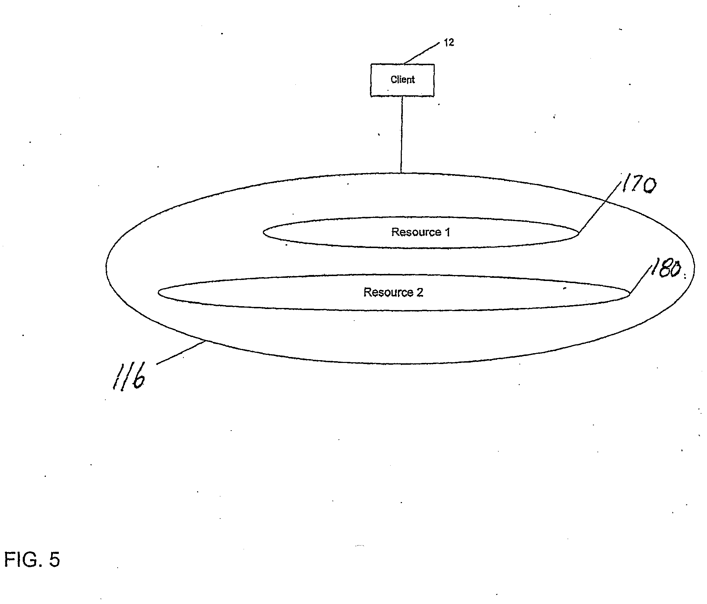

Referring now to FIG. 5, a client 12 connecting to a server 161 (FIG. 4) will see the server group 116 as if the group were a single server having multiple IP addresses. The client 12 is not necessarily aware that the server group 116 is constructed out of a potentially large number of servers 161, 162, 163, nor is it aware of the partitioning of the block data volumes 170 and 180 over the several servers. A particular client 12 may have access to only a single server, through its unique IP address. As a result, the number of servers and the manner in which resources are partitioned among the servers may be changed without affecting the network environment seen by the client 12.

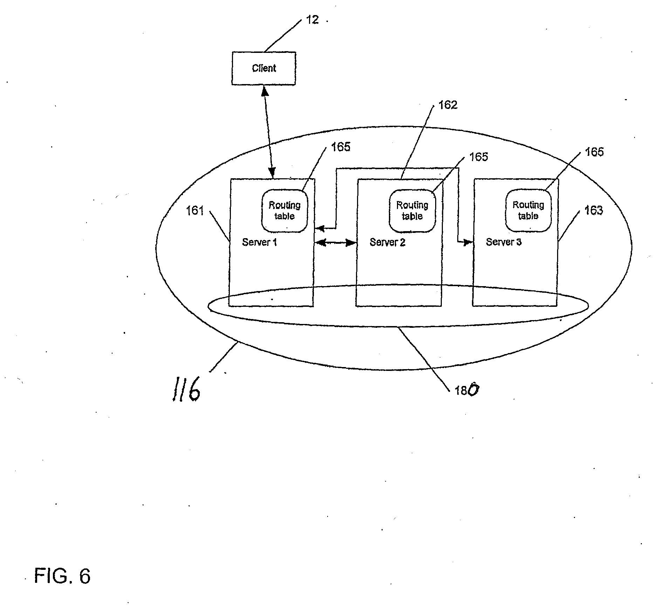

FIG. 6 shows the resource 180 of FIG. 5 as being partitioned across servers 161, 162 and 163. In the partitioned server group 116, any data volume may be spread over any number of servers within the server group 116. As seen in FIG. 4 and 5, one volume 170 (Resource 1) may be spread over servers 162, 163, whereas another volume 180 (Resource 2) may be spread over servers 161, 162, 163. Advantageously, the respective volumes may be arranged in fixed-size groups of blocks, also referred to as "pages," wherein an exemplary page contains 8192 blocks. Other suitable page sizes may be employed, and pages comprising variable numbers of blocks (rather than fixed) are also possible.

In an exemplary implementation, each server in the group 116 contains a routing table 165 for each volume, with the routing table 165 identifying the server on which a specific page of a specific volume can be found. For example, when the server 161 receives a request from a client 12 for volume 3, block 93847, the server 161 calculates the page number (page 11 in this example for the page size of 8192) and looks up in the routing table 165 the location or number of the server that contains page 11. If server 163 contains page 11, the request is forwarded to server 163, which reads the data and returns the data to the server 161. Server 161 then sends the requested data to the client 12. The response may be returned to the client 12 via the same server 161 that received the request from the client 12. Alternatively, the short-cut approach described above may be used.

Accordingly, it is immaterial to the client 12 as to which server 161, 162, 163 has the resource of interest to the client 12. As described above, the servers 162, 162 and 163 will employ the routing tables to service the client request, and the client 12 need not know ahead of time which server is associated with the requested resource. This allows portions of the resource to exist at different servers. It also allows resources, or portions thereof, to be moved while the client 12 is connected to the partitioned server group 116. This latter type of resource re-partitioning is referred to herein as "block data migration" in the case of moving parts of resources consisting of data blocks or pages. One of ordinary skill in the art will of course see that resource parts consisting of other types of resources (discussed elsewhere in this disclosure) may also be moved by similar means. Accordingly, the invention is not limited to any particular type of resource.

Data may be moved upon command of an administrator or automatically by storage load balancing mechanisms such as those discussed herein. Typically, such movement or migration of data resources is done in groups of blocks referred to as pages.

When a page is moved from one equivalent server to another, it is important for all of the data, including that in the page being moved, to be continuously accessible to the clients so as not to introduce or increase response time latency. In the case of manual moves, as implemented in some servers seen today, the manual migration interrupts service to the clients. As this is generally considered unacceptable, automatic moves that do not result in service interruptions are preferable. In such automatic migrations, the movement must needs be transparent to the clients.

According to one exemplary implementation, of the present invention, a page to be migrated is considered initially "owned" by the originating server (i.e., the server on which the data is initially stored) while the move is in progress. Routing of client read requests continue to go through this originating server.

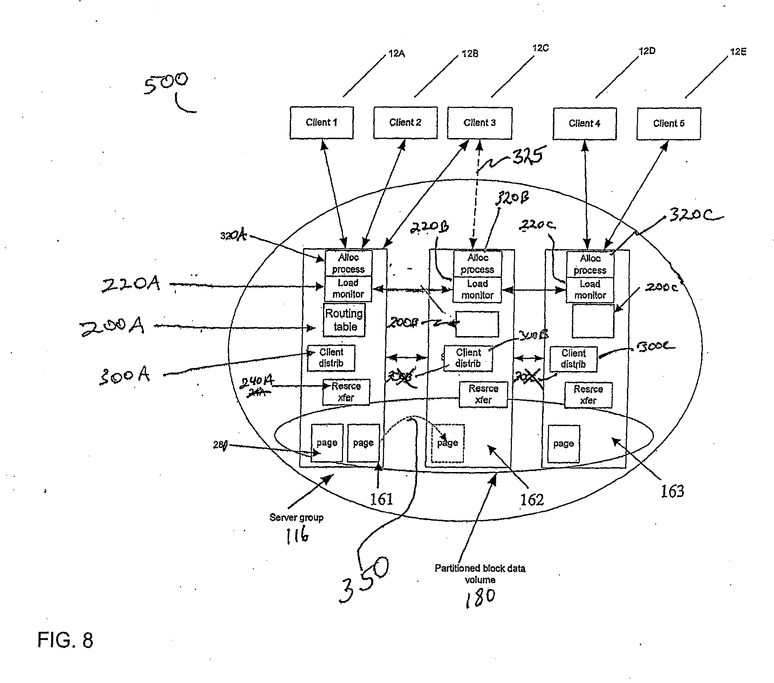

Requests to write new data into the target page are handled specially: data is written to both the page location at the originating server and to the new (copy) page location at the destination server. In this way, a consistent image of the page will end up at the destination server even if multiple write requests are processed during the move. In one exemplary implementation, it is the resource transfer process 240 depicted in FIG. 8 that carries out this operation. A more elaborate approach may be used when pages become large. In such cases, the migration may be done in pieces: a write to a piece that has already been moved is simply redirected to the destination server; a write to a piece currently being moved goes to both servers as before. Obviously, a write to a piece not yet moved may be processed by the originating server.

Such write processing approaches are necessary to support the actions required if a failure should occur during the move, such as a power outage. If the page is moved as a single unit, an aborted (failed) write can begin over again from the beginning. If the page is moved in pieces, the move can be restarted from the piece that was in transit at the failure. It is the possibility of restart that makes it necessary to write data to both the originating and destination servers.

Table 1 shows the sequence of block data migration stages for a unit block data move from a server A to Server B; Table 2 shows the same information for a piece-wise block data move.

**Table 1**

| **Stage** | **Restart Stage** | **Destination** | **Action** | **Read** | **Write** |
|---|---|---|---|---|---|
| 1 | N/A | Server A | Not started | Server A | Server A |
| 2 | 2 | Server A | Start move | Server A | Servers A and B |
| 3 | 2 | Server A | Finish Move | Server A | Servers A and B |
| 4 | N/A | Server B | Routing Table updated | Server B | Server B |

**Table 2**

| **Stage** | **Restart Stage** | **Destination** | **Action** | **Read** | **Write** |
|---|---|---|---|---|---|
| 1 | N/A | Server A | Not started | Server A | Server A |
| 2 | 2 | | Start move, piece 1 | Server A | Servers A and B for piece 1, server A for others |
| 3 | 2 | Server A | Finish move, piece 1 | Server B for piece 1, server A for others | Server B for piece 1, server A for others |
| 4 | 4 | | Start move, piece 2 | Server B for piece 1, server A for others | Server B for piece 1, servers A and B for piece 2, server A for others |
| 5 | 4 | | Finish move, piece 2 | Server B for pieces 1 and 2, server A for others | Server B for pieces 1 and 2, server A for others |
| ... | (repeat as needed for all pieces) | | | | |
| n | N/A | Server B | Routing Table updated | Server B | Server B |

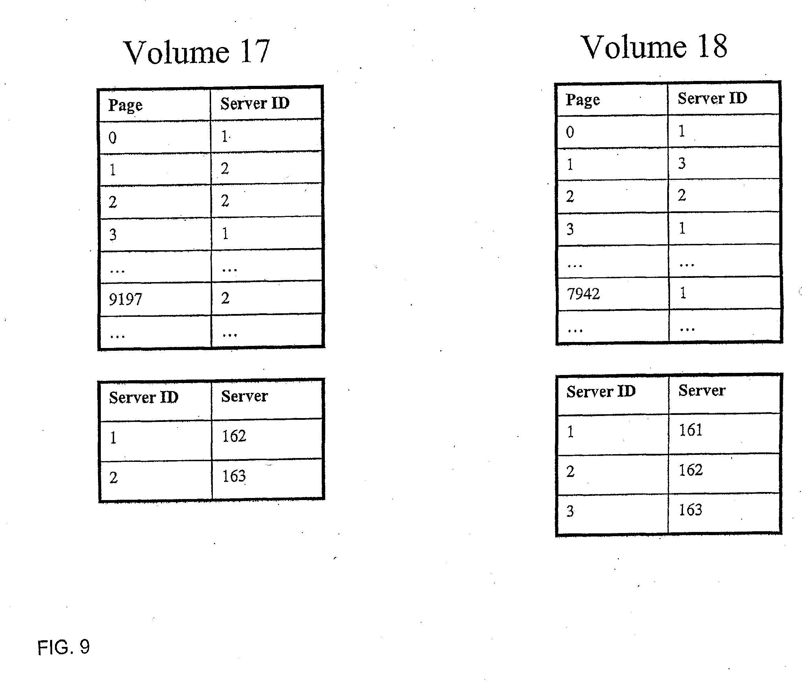

Upon moving a resource, the routing tables 165 (referring again to FIG. 9) are updated as necessary (through means well-known in the art) and subsequent client requests will be forwarded to the server now responsible for handling that request. Note that, at least among servers containing the same resource 170 or 180, the routing tables 165 may be identical subject to propagation delays.

In some exemplary implementations, once the routing tables are updated, the page at the originating server (or "source" resource) is deleted by standard means. Additionally, a flag or other marker is set in the originating server for the originating page location to denote, at least temporarily, that that data is no longer valid. Any latent read or write requests still destined for the originating server will thus trigger an error and subsequent retry, rather than reading the expired data on that server. By the time any such retries return, they will encounter the updated routing tables and be appropriately directed to the destination server. In no case are duplicated, replicated, or shadowed copies of the block data (as those terms are known in the art) left on in the server group. Optionally, in other exemplary implementations the originating server may retain a pointer or other indicator to the destination server. The originating server may, for some selected period of time, forward requests, including but not being limited to, read and write requests, to the destination server. In this optional embodiment, the client 12 does not receive an error when the requests are latest or arrive at the originating server because some of the routing tables in the group have not yet been updated. Requests can be handled at both the originating server and the destination server. This lazy updating process eliminates or reduces the need to synchronize the processing of client requests with routing table updates. The routing table updates occur in the background.

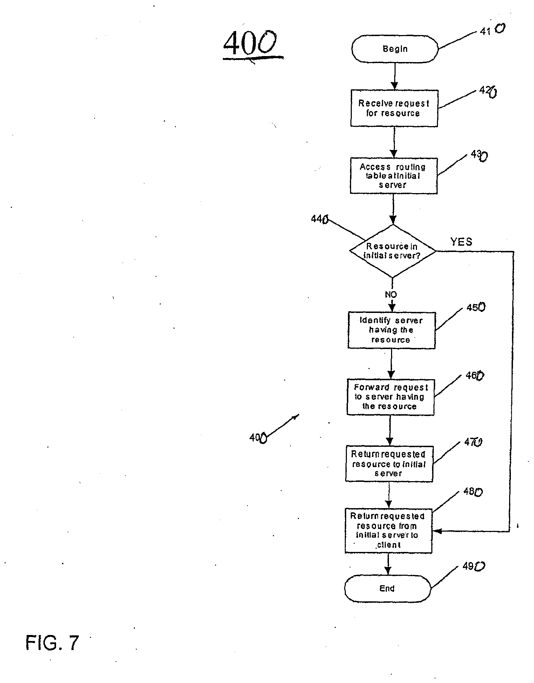

FIG. 7 depicts an exemplary request handling process 400 for handling client requests in a partitioned server environment. The request handling process 400 begins at 410 by receiving a request for a resource, such as a file or blocks of a file, at 420. The request handling process 400 examines the routing table, in operation 430, to determine at which server the requested resource is located. If the requested resource is present at the initial server, the initial server returns the requested resource to the client 12, at 480, and the process 400 terminates at 490. Conversely, if the requested resource is not present at the initial server, the server will use the data from the routing table to determine which server actually holds the resource requested by the client, operation 450. The request is then forwarded to the server that holds the requested resource, operation 460, which returns the requested resource to the initial server, operation 480. The process 400 then goes to 480 as before, to have the initial server forward the requested resource to the client 12, and the process 400 terminates, at 490.

Accordingly, one of ordinary skill in the act will see that the system and methods described herein are capable of migrating one or more partitioned resources over a plurality of servers, thereby providing a server group capable of handling requests from multiple clients. The resources so migrated over the several servers can be directories, individual files within a directory, blocks within a file or any combination thereof. Other partitioned services may be realized. For example, it may be possible to partition a database in an analogous fashion or to provide a distributed file system, or a distributed or partitioned server that supports applications being delivered over the Internet. In general, the approach can be applied to any service where a client request can be interpreted as a request for a piece of the total resource.

Turning now to FIG. 8, one exemplary implementation of the system 500 is depicted wherein the system is capable of redistributing client load to provide more efficient service. Specifically, FIG. 8 depicts a system 500 wherein the clients 12A through 12E communicate with the server block 116. The server block 116 includes three equivalent servers, server 161, 162, and 163, in that each of the servers will provide substantially the same response to the same request from a client. Typically, it will produce the identical response, subject to differences arising due to propagation delay or response timing. As such, from the perspective of the clients 12, the server group 116 appears to be a single server system that provides multiple network or IP addresses for communicating with clients 12A-12E.

Each server includes a routing table, depicted as routing tables 200A, 200B and 200C, a load monitor process 220A, 220B and 220C respectively, a client allocation process 320A, 320B, and 320C, a client distribution process 300A, 300B and 300C and a resource transfer process, 240A, 240B and 240C respectively. Further, and for the purpose of illustration only, FIG. 8 represents the resources as pages of data 280 that may be transferred from one server to another server.

As shown by arrows in FIG. 8, each of the routing tables 200A, 200B, and 200C are capable of communicating with each other for the purpose of sharing information. As described above, the routing tables may track which of the individual equivalent servers is responsible for a particular resource maintained by the server group 116. Because each of the equivalent servers 161, 162 and 163 are capable of providing the same response to the same request from a client 12, routing tables 200A, 200B, and 200C (respectively) coordinate with each other to provide a global database of the different resources and the specific equivalent servers that are responsible for those resources.

FIG. 9 depicts one example of a routing table 200A and the information stored therein. As depicted in FIG. 9, each routing table includes an identifier for each of the equivalent servers 161, 162 and 163 that support the partitioned data block storage group 116. Additionally, each of the routing tables includes a table that identifies those data blocks associated with each of the respective equivalent servers. In the routing table embodiment depicted by FIG. 9, the equivalent servers support two partitioned volumes. A first one of the volumes is distributed or partitioned across all three equivalent servers 161, 162, and 163. The second partitioned volume is partitioned across two of the equivalent servers, servers 162 and 163 respectively.

In operation, each of the depicted servers 161, 162, and 163 is capable of monitoring the complete load that is placed on the server group 116 as well as the load from each client and the individual client load that is being handled by each of the respective servers 161, 162 and 163. To this end, each of the servers 161, 162 and 163 include a load monitoring process 220A, 220B, and 220C respectively. As described above, the load monitor processes 220A, 220B and 220C are capable of communicating among each other. This is illustrated in FIG. 8 by the bidirectional lines that couple the load monitor processes on the different servers 161, 162 and 163.

Each of the depicted load monitor processes may be software processes executing on the respective servers and monitoring the client requests being handled by the respective server. The load monitors may monitor the number of individual clients 12 being handled by the respective server, the number of requests being handled by each and all of the clients 12, and/or other information such as the data access patterns (predominantly sequential data access, predominantly random data access, or neither).

Accordingly, the load monitor process 220A is capable of generating information representative of the client load applied to the server 161 and is capable of corresponding with the load monitor 220B of server 162. In turn, the load monitor process 220B of server 162 may communicate with the load monitor process 220C of server 163, and load monitor process 220C may communicate with process 220A (not shown). By allowing for communication between the different load monitor processes 220A, 220B, and 220C, the load monitor processes may determine the system-wide load applied to the server group 116 by the clients 12.

In this example, the client 12C may be continually requesting access to the same resource. For example, such a resource may be the page 280, maintained by the server 161. That load in addition to all the other requests may be such that server 161 is carrying an excessive fraction of the total system traffic, while server 162 is carrying less than the expected fraction. Therefore the load monitoring and resource allocation processes conclude that the page 280 should be moved to server 162, and the client distribution process 300A can activate the block data migration process 350 (described above) that transfers page 280 from server 161 to server 162. Accordingly, in the embodiment depicted in FIG. 8 the client distribution process 300A cooperates with the resource transfer process 240A to re-partition the resources in a manner that is more likely to cause client 12C to continually make requests to server 162 as opposed to server 161.

Once the resource 280 has been transferred to server 162, the routing table 200B can update itself (by standard means well-known in the art) and update the routing tables 200A and 200C accordingly, again by standard means well-known in the art. In this way, the resources may be repartitioned across the servers 161, 162 and 163 in a manner that redistribute client load as well.

Referring now back to FIG. 4, the systems and methods can also be used for providing a more efficient operation of a partitioned service.

In this exemplary implementation, the server group 16 provides a block data storage service that may operate as a storage area network (SAN) comprised of a plurality of equivalent servers, servers 161, 162 and 163. Each of the servers 161, 162 and 163 may support one or more portions of the partitioned block data volumes 188 and 170. In the depicted system 110, there are two data volumes and three servers, however there is no specific limit on the number of servers. Similarly, there is no specific limit on the number of resources or data volumes. Moreover, each data volume may be contained entirely on a single server, or it may be partitioned over several servers, either all of the servers in the server group, or a subset of the server group. In practice, there may of course be limits due to implementation considerations, for example the amount of memory available in the servers 161, 162 and 163 or the computational limitations of the servers 161, 162 and 163. Moreover, the grouping itself, i.e., deciding which servers will comprise a group, may in one practice comprise an administrative decision. In a typical scenario, a group might at first contain only a few servers, perhaps only one. The system administrator would add servers to a group as needed to obtain the level of service required. Increasing servers creates more space (memory, disk storage) for resources that are stored, more CPU processing capacity to act on the client requests, and more network capacity (network interfaces) to carry the requests and responses from and to the clients. It will be appreciated by those of skill in the art that the systems described herein are readily scaled to address increased client demands by adding additional servers into the group 116. However, as client load varies, the system 110 as described below can redistribute client load to take better advantage of the available resources in server group 116. To this end, the system 110 in one embodiment, comprises a plurality of equivalent servers. Each equivalent server supports a portion of the resources partitioned over the server group 116. As client requests are delivered to the equivalent servers, the equivalent servers coordinate among themselves to generate a measure of system load and to generate a measure of the client load of each of the equivalent servers. In a preferred practice, this coordinating is done in a manner that is transparent to the clients 12, so that the clients 12 see only requests and responses traveling between the clients 12 and server group 16.

Referring now back to FIG. 5, a client 12 connecting to a server 161 (FIG. 4) will see the server group 116 as if the group were a single server having multiple IP addresses. The client 12 is not aware that the server group 116 is constructed out of a potentially large number of servers 161, 162, 163, nor is it aware of the partitioning of the block data volumes 170, 180 over the several servers 161, 162, 163. As a result, the number of servers and the manner in which resources are partitioned among the servers may be changed without affecting the network environment seen by the client 12.

Referring now to FIG. 6, in the partitioned server group 116, any volume may be spread over any number of servers within the group 116. As seen in FIGS. 4 and 5, one volume 170 (Resource 1) may be spread over servers 162, 163, whereas another volume 180 (Resource 2) may be spread over servers 161, 162, 163. Advantageously, the respective volumes are arranged in fixed-size groups of blocks, also referred to as "pages", wherein an exemplary page contains 8192 blocks. Other suitable page sizes may be employed. In an exemplary embodiment, each server in the group 116 contains a routing table 165 for each volume, with the routing table 165 identifying the server on which a specific page of a specific volume can be found. For example, when the server 161 receives a request from a client 12 for volume 3, block 93847, the server 161 calculates the page number (page 11 in this example for the page size of 8192) and looks up in the routing table 165 the location or number of the server that contains page 11. If server 163 contains page 11, the request is forwarded to server 163, which reads the data and returns the data to the server 161. Server 161 then send the requested data to the client 12. In other words, the response is always returned to the client 12 via the same server 161 that received the request from the client 12.

It is transparent to the client 12 to which server 161, 162, 163 he is connected. Instead, the client only sees the servers in the server group 116 and requests the resources of the server group 116. It should be noted here that the routing of client requests is done separately for each request. This allows portions of the resource to exist at different servers. It also allows resources, or portions thereof, to be moved while the client is connected to the server group 116 - if that is done, the routing tables 165 are updated as necessary and subsequent client requests will be forwarded to the server now responsible for handling that request. At least within a resource 170 or 180, the routing tables 165 are identical. The described invention is different from a "redirect" mechanism, wherein a server determines that it is unable to handle requests from a client, and redirects the client to the server that can do so. The client then establishes a new connection to another server. Since establishing a connection is relatively inefficient, the redirect mechanism is ill suited for handling frequent requests.

FIG. 7 depicts an exemplary request handling process 400 for handling client requests in a partitioned server environment. The request handling process 400 begins at 410 by receiving a request for a resource, such as a file or blocks of a file, at 420. The request handling process 400 checks, in operation 430, if the requested resource is present at the initial server that received the request from the client 12 examines the routing table, in operation 430, to determine at which server the requested resource is located. If the requested resource is present at the initial server, the initial server returns the requested resource to the client 12, at 480, and the process 400 terminates at 490. Conversely, if the requested resource is not present at the initial server, the server will consult a routing table, operation 440,use the data from the routing table to determine which server actually holds the resource requested by the client, operation 450. The request is then forwarded to the server that holds the requested resource, operation 460, which returns the requested resource to the initial server, operation 480. The process 400 then goes to 480 as before, to have the initial server forward the requested resource to the client 12, and the process 400 terminates, at 490.

The resources spread over the several servers can be directories, individual files within a directory, or even blocks within a file. Other partitioned services could be contemplated. For example, it may be possible to partition a database in an analogous fashion or to provide a distributed file system, or a distributed or partitioned server that supports applications being delivered over the Internet. In general, the approach can be applied to any service where a client request can be interpreted as a request for a piece of the total resource, and operations on the pieces do not require global coordination among all the pieces.

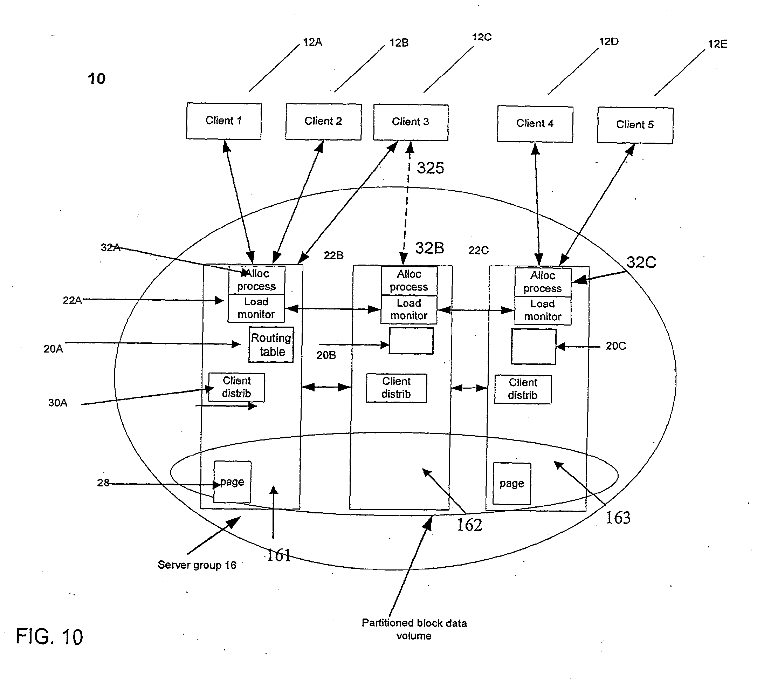

Turning now to FIG. 10, one exemplary implementation of a block data service system 10 is depicted. Specifically, FIG. 10 depicts the system 10 wherein the client 12 communicates with the server group 16. The server group 16 includes three servers, server 161, 162 and 163. Each server includes a routing table depicted as routing tables 20A, 20B and 20C. In addition to the routing tables, each of the equivalent servers 161, 162 and 163 are shown in FIG. 10 as including a load monitor process, 22A, 22B and 22C respectively.

As shown in FIG. 10, each of the equivalent servers 161, 162 and 163 may include a routing table 20A, 20B and 20C respectively. As shown in FIG. 10, each of the routing tables 20A, 20B and 20C are capable of communicating with each other for the purposes of sharing information. As described above, the routing tables can track which of the individual equivalent servers is responsible for a particular resource maintained by the server group 16. In the embodiment shown in FIG. 10 the server group 16 may be a SAN, or part of a SAN, wherein each of the equivalent servers 161, 162 and 163 has an individual IP address that may be employed by a client 12 for accessing that particular equivalent server on the SAN. As further described above, each of the equivalent servers 161, 162 and 163 is capable of providing the same response to the same request from a client 12. To that end, the routing tables of the individual equivalent 161, 162 and 163 coordinate with each other to provide a global database of the different resources, and this exemplary embodiments data blocks, pages or other organizations of data blocks, and the individual equivalent servers that are responsible for those respective data blocks, pages, files or other storage organization.

Returning now to FIG. 9, there is depicted an exemplary routing table. Each routing table in the server group 16, such as table 20A, includes an identifier (Server ID) for each of the equivalent servers 161, 162 and 163 that support the partitioned data block storage service. Additionally, each of the routing tables includes a table that identifies those data blocks pages associated with each of the respective equivalent servers. In the embodiment depicted by FIG. 9, the equivalent servers support two partitioned volumes. A first one of the volumes, Volume 18, is distributed or partitioned across all three equivalent servers 161, 162 and 163. The second partitioned volume, Volume 17, is partitioned across two of the equivalent servers, servers 162 and 163 respectively.

The routing tables may be employed by the system 10 to balance client load across the available servers.

The load monitor processes 22A, 22B and 22C each observe the request patterns arriving at their respective equivalent servers to determine to determine whether patterns or requests from clients 12 are being forwarded to the SAN and whether these patterns can be served more efficiently or reliably by a different arrangement of client connections to the several servers. In one embodiment, the load monitor processes 22A, 22B and 22C monitor client requests coming to their respective equivalent servers. In one embodiment, the load monitor processes each build a table representative of the different requests that have been seen by the individual request monitor processes. Each of the load monitor processes 22A, 22B and 22C are capable of communicating between themselves for the purpose of building a global database of requests seen by each of the equivalent servers. Accordingly, in this embodiment each of the load monitor processes is capable of integrating request data from each of the equivalent servers 161, 162 and 163 in generating a global request database representative of the request traffic seen by the entire block data storage system 16. In one embodiment, this global request database is made available to the client distribution processes 30A, 30B and 30C for their use in determining whether a more efficient or reliable arrangement of client connections is available.

FIG. 10 illustrates pictorially that the server group 16 may be capable of redistributing client load by having client 12C, which was originally communicating with server 161, redistributed to server 162. To this end, FIG. 10 depicts an initial condition wherein the server 161 is communicating with clients 12A, 12B, and 12C. This is depicted by the bidirectional arrows coupling the server 161 to the respective clients 12A, 12B, and 12C. As further shown in FIG. 10, in an initial condition, clients 12D and 12E are communicating with server 163 and no client (during the initial condition) is communicating with server 162. Accordingly, during this initial condition, server 161 is supporting requests from three clients, clients 12A, 12B, and 12C. Server 162 is not servicing or responding to requests from any of the clients.

Accordingly, in this initial condition the server group 16 may determine that server 161 is overly burdened or asset constrained. This determination may result from an analysis that server 161 is overly utilized given the assets it has available. For example, it could be that the server 161 has limited memory and that the requests being generated by clients 12A, 12B, and 12C have overburdened the memory assets available to server 161. Thus, server 161 may be responding to client requests at a level of performance that is below an acceptable limit. Alternatively, it may be determined that server 161, although performing and responding to client requests at an acceptable level, is overly burdened with respect to the client load (or bandwidth) being carried by server 162. Accordingly, the client distribution process 30 of the server group 16 may make a determination that overall efficiency may be improved by redistributing client load from its initial condition to one wherein server 162 services requests from client 12C. Considerations that drive the load balancing decision may vary and some examples are the desire to reduce routing: for example if one server is the destination of a significantly larger fraction of requests than the others on which portions of the resource (e.g., volume) resides, it may be advantageous to move the connection to that server. Or to further have balancing of server communications load: if the total communications load on a server is substantially greater than that on some other, it may be useful to move some of the connections from the highly loaded server to the lightly loaded one, and balancing of resource access load (e.g., disk I/O load) -- as preceding but for disk I/O load rather than comm load. This is an optimization process that involves multiple dimensions, and the specific decisions made for a given set of measurements may depend on administrative policies, historical data about client activity, the capabilities of the various servers and network components, etc.

To this end, FIG. 10 depicts this redistribution of client load by illustrating a connection 325 (depicted by a dotted bi-directional arrow) between client 12C and server 162. It will be understood that after redistribution of the client load, the communication path between the client 12C and server 161 may terminate.

Balancing of client load is also applicable to new connections from new clients. When a client 12F determines that it needs to access the resources provided by server group 16, it establishes an initial connection to that group. This connection will terminate at one of the servers 161, 162, or 163. Since the group appears as a single system to the client, it will not be aware of the distinction between the addresses for 161, 162, and 163, and therefore the choice of connection endpoint may be random, round robin, or fixed, but will not be responsive to the current load patterns among the servers in group 16.

When this initial client connection is received, the receiving server can at that time make a client load balancing decision. If this is done, the result may be that a more appropriate server is chosen to terminate the new connection, and the client connection is moved accordingly. The load balancing decision in this case may be based on the general level of loading at the various servers, the specific category of resource requested by the client 12F when it established the connection, historic data available to the load monitors in the server group 16 relating to previous access patterns from server 12F, policy parameters established by the administrator of server group 16, etc.

Another consideration in handling initial client connections is the distribution of the requested resource. As stated earlier, a given resource may be distributed over a proper subset of the server group. If so, it may happen that the server initially picked by client 12F for its connection serves no part of the requested resource. While it is possible to accept such a connection, it is not a particularly efficient arrangement because in that case all requests from the client, not merely a fraction of them, will require forwarding. For this reason it is useful to choose the server for the initial client connection only from among the subset of servers in server group 16 that actually serve at least some portion of the resource requested by new client 12F.

This decision can be made efficiently by the introduction of a second routing database. The routing database described earlier specifies the precise location of each separately moveable portion of the resource of interest. Copies of that routing database need to be available at each server that terminates a client connection on which that client is requesting access to the resource in question. The connection balancing routing database simply states for a given resource as a whole which servers among those in server group 16 currently provide some portion of that resource. For example, the connection balancing routing database to describe the resource arrangement shown in Figure 1 consists of two entries: the one for resource 17 lists servers 162 and 163, and the one for resource 18 lists servers 161, 162, and 163.

Referring now back to FIGS. 4 to 7, one of ordinary skill in the act will see that the systems and methods can also be used for the system and methods described herein are capable of partitioning one or more resources over a plurality of servers thereby providing a server group capable of handling requests from multiple clients. Additionally, the above description illustrates that the systems and methods described herein can redistribute or repartition the resource to change how portions of the resource are distributed or spread across the server group. The resources spread over the several servers can be directories, individual files within a directory, blocks within a file or any combination thereof. Other partitioned services may be realized. For example, it may be possible to partition a database in an analogous fashion or to provide a distributed file system, or a distributed or partitioned server that supports applications being delivered over the Internet. In general, the approach may be applied to any service where a client request can be interpreted as a request for a piece of the total resource.

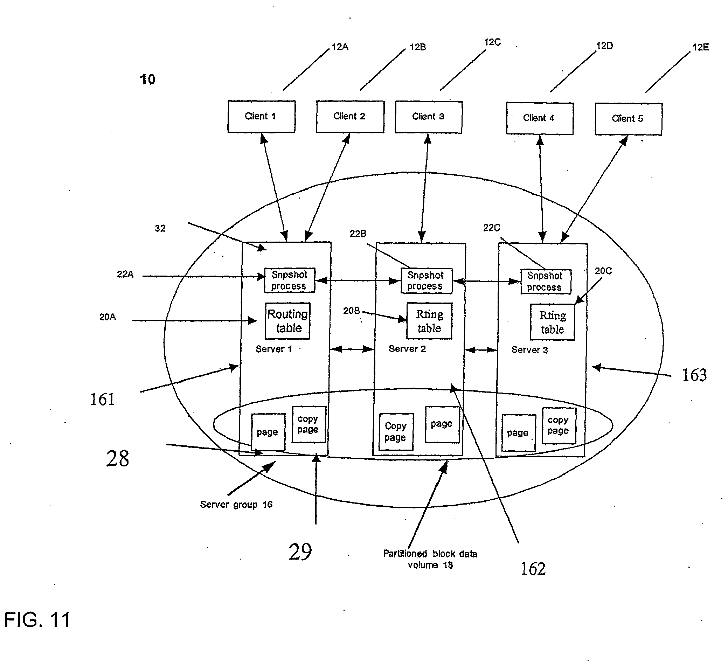

Turning now to FIG. 11, one exemplary implementation of the system 10 is depicted wherein the system is capable of generating a distributed snapshot of the storage volume 18 partitioned across the servers 161, 162 and 163. Specifically, FIG. 11 depicts the system 10 wherein the clients 12 communicate with the server group 16. The server group 16 includes three servers, server 161, 162 and 163. In the exemplary implementation of FIG. 11 the servers 161, 162 and 163 are equivalent servers, in that each of the servers will provide substantially the same resource to the same request from a client. As such, from the perspective of the clients 12, the server group 16 appears to be a single server system that provides multiple network or IP addresses for communicating with clients 12. Each server includes a routing table, depicted as routing tables 20A, 20B and 20C, and a snapshot process 22A, 22B and 22C respectively. Further, and for the purpose of illustration only, the FIG. 11 represents the resources as pages of data 28 that may be copied to generate a second storage volume that is an image of the original storage volume 18.

As shown in FIG. 11, each of the routing tables 20A, 20B and 20C are capable of communicating with each other for the purpose of sharing information. As described above, the routing tables may track which of the individual equivalent servers is responsible for a particular resource maintained by the server group 16. In the embodiment shown in FIG. 11 the server group 16 may form a SAN wherein each of the equivalent servers 161, 162 and 163 has an individual IP address that may be employed by a client 12 for accessing that particular equivalent server on the SAN. As further described above, each of the equivalent servers 161, 162 and 163 may be capable of providing the same response to the same request from a client 12. To that end, the routing tables 20A, 20B and 20C of the individual equivalent 161, 162 and 163 coordinate with each other to provide a global database of the different resources, and the specific equivalent servers that are responsible for those resources.

As depicted in FIG. 9, each routing table includes an identifier (Server ID) for each of the equivalent servers 161, 162 and 163 that support the partitioned data block storage service. Additionally, each of the routing tables includes a table that identifies those data pages associated with each of the respective equivalent servers. As depicted by FIG. 9, the equivalent servers support two partitioned volumes. A first one of the volumes, Volume 18, is distributed or partitioned across all three equivalent servers 161, 162 and 163. The second partitioned volume, Volume 17, is partitioned across two of the equivalent servers, servers 162 and 163 respectively.

Returning now again to FIG. 11, it can be seen that each of the equivalent servers 161, 162 and 163 includes a snapshot process 22a, 22b and 22c, respectively. Each snapshot process may be a computer process operating on the server system and designed for generating a snapshot of that portion of that storage volume which is maintained by its respective server. Accordingly, the snapshot process 22a depicted in Figure 5 may be responsible for generating a copy of that portion of storage volume 18 that is maintained by server 161. This operation is depicted, at least in part, by FIG. 11 showing a page 28 and a copy of the page 29.

In operation, each of the equivalent servers 161, 162 and 163 is generally capable of acting independently. Accordingly, the snapshot processes 22a, 22b and 22c must act in a coordinated manner to create an accurate snapshot of the storage volume 18 at a particular point in time. This need for coordination arises, at least in part, from the fact that write requests may be issued from the client's 12a through 12e at any time and to any of the servers 161, 162 and 163. Accordingly, write requests will be received by individual ones of the servers 161, 162 and 163 during the time that a snapshot process has begun. To prevent a snapshot process from generating unacceptable or unexpected results, the snapshot processes 22a, 22b and 22c coordinate their operation with each other for the purposes of generating state information that is representative of the state of the partitioned storage volume 18 at a particular point in time. Specifically, in one practice a time parameter is selected such that there is a time "T", shortly after the issuing of the command to create a snapshot, such that all write operations for which completion is indicated to the client 12 prior to "T" are included in the snapshot, and no write operations for which completion is indicated after "T" are not included in the snapshot.

To this end, each snapshot process 22a, 22b and 22c is capable of receiving a request from an administrator to create a snapshot of the storage volume 18. The snapshot process includes a coordinating process that will generate commands for coordinating the activities and operation of the snapshot processes operating on other servers that are supporting the storage volume of interest to the administrator. In the example depicted in FIG. 11, an administrator may issue a snapshot command to the snapshot process 22b operating on server 162. The snapshot command may request the snapshot process 22b to create a snapshot of the storage volume 18. The snapshot process 22b can access the routing table 22b to determine those servers in the server group 16 that are supporting at least a portion of the data blocks within storage volume 18. The snapshot process 22b may then issue a command to each of the servers supporting a portion of the storage volume 18. In the example of FIG. 11, each of the servers 161, 162 and 163 are supporting a portion of the storage volume 18. Accordingly, the snapshot process 22b may issue a command to each of the snapshot processes 22a and 22b to prepare for creating a snapshot. At the same time, the snapshot process 22b can begin itself to prepare to create a snapshot of that portion of the storage volume 18 maintained on server 162.

In one practice, shown in Figure 7, in response to receiving the command from snapshot process 22b to prepare for creating a snapshot, each of the snapshot processes 22a, 22b and 22 c, may suspend all requests received by clients impending execution. This may include write requests and read requests as well as any other requests appropriate for the application. To this end, each snapshot process 22a, 22b and 22c may include a request control process that allows the snapshot process to process requests being carried out by its respective server and suspend operation of those requests, thereby putting a hold on write operations that may change the state of the storage volume 18.

Once the snapshot process has suspended processing of requests, it may generate a reply to the coordinating snapshot process 22b indicating that the server is ready to begin taking a snapshot of the storage volume 18. Once the coordinating snapshot process 22b has received a ready signal from each of the servers 22a and 22c and has determined that it is also ready for a snapshot operation, the coordinating snapshot process 22b may issue a snapshot command to each of the appropriate servers. In response to receiving the snapshot commands, the server may activate, optionally, an archive process that generates state information that is representative of a copy of the data blocks of volume 18 maintained by that respective server In one practice and one embodiment, a mirror image is created, through a "copy on write" process such that the portions (pages) of the volume which have not changed since the creation of the snapshot are recorded once. That mirror image may be transferred to tape or other archival storage at a later time if desired. Such techniques are known in the art, and the technique employed may vary according to the application and as appropriate given the volume of the mirror image and other similar criteria.

Once the state information has been created, the snapshot process is terminated and the servers may release any suspended or pending requests for processing.

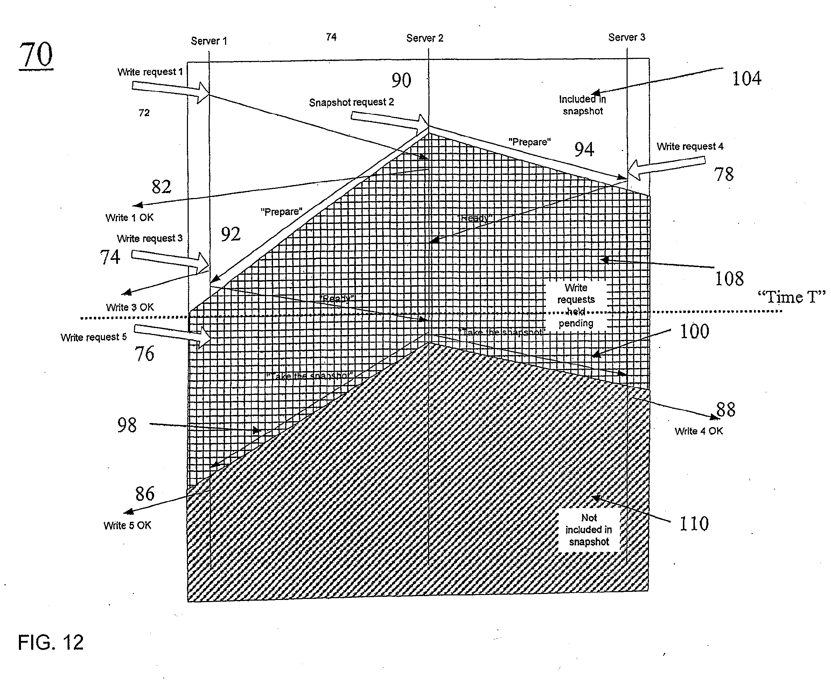

FIG. 12 depicts one process according to the invention for generating a snapshot image of a data volume that has been partitioned across the servers 161, 162 and 163. As described more fully herein the distributed snapshot 70 depicted by FIG. 12 allows a storage administrator to generate information representative of the state of the storage volume 18 at a particular point and time. The state information generated may include information such as the file structure, meta-data about the stored data, copies of the data maintained by the partitioned storage volume or copies of portions of the storage volume, or other such information. Accordingly, it will be understood that the snapshot process described herein has many applications including applications wherein information is generated about the structure of the partitioned data volume and stored for later use as well as applications wherein a complete archived copy of the partitioned storage volume is created. The distributed snapshot process described herein may be employed in other applications and such other applications shall be understood to fall within the scope of the invention.

FIG. 12 depicts a time/space diagram that shows a sequence of operations that implement a snapshot request for the purpose of generating state information of a partitioned storage volume or storage volumes. In particular, FIG. 12 depicts a multistage process 70 that creates a consistent distributed snapshot of the storage volume. To this end, FIG. 12 depicts three vertical lines to represent the three servers, 162, 162 and 163 shown in Figure 5. Arrows 72 through 78 depict write requests issued from one or more clients 12, and arrows 82-88 represent responses from respective ones of the servers 161, 162 and 163.

As shown in FIG. 12, the process 70 begins when a snapshot command is issued from an administrator. In this case, the snapshot command is issued from the administrator and delivered to server 162. The snapshot command is depicted as arrow 90 directed to server 162. As shown in FIG. 12, the snapshot process executing on server 162 responds to the snapshot command by generating commands for coordinating the operation of the other servers 161 and 163. The commands will coordinate the snapshot processes executed on servers 161 and 163 and generate state information representative of the state of the data maintained by each of the respective servers as part of the storage volume 18.

As further shown in FIG. 12, the snapshot process executing on server 162 issues a prepare command 92 and 94 to each of the respective servers 161 and 163. The snapshot processes operating on each of these respective servers 161 and 163 respond to the prepare command by holding pending requests received from clients prior to the arrival of the "prepare" command (e.g., request 78) and requests received subsequent to the "prepare" command (e.g., request 76).

Once requests have been held, the servers 161 and 163 reply to the server 162 that issued the prepare command indicating that the respective servers 161 and 163 have suspended all pending requests. The server 162 acting as the coordinating server then issues the snapshot command to each of the servers. This is shown in FIG. 12 by the arrows 98 and 100.

In response to the snapshot command, servers 161 and 163, as well as server 162, create a snapshot of the portion of the data volume maintained by that respective server. The snapshot information may then be stored in a data file on each of the respective servers. In an optional practice, the snapshot processes on each of the servers 161, 162, and 163, may generate an archive copy of the data volume. The archive copy may be transferred to a tape storage device, or some other mass storage device.

The snapshot generated will contain all of the request completed in the region 104 and none of those completed in region 110.

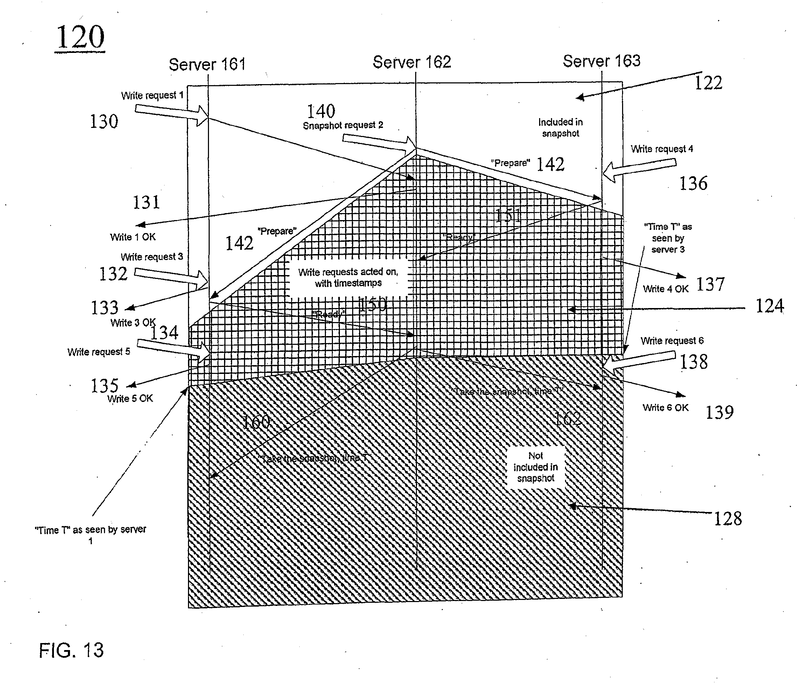

FIG. 13 depicts an alternative exemplary implementation of a process for generating a snapshot of a storage volume. Specifically, FIG. 13 depicts a space-time diagram that shows a process 120 as it occurs over three time periods. These time periods are depicted in FIG. 13 as different shaded regions within the space-time diagram and are labeled as time periods 122, 124 and 126. Time period 122 occurs before the time at which an administrator issues a snapshot request, time period 124 occurs between the time period that the snapshot request is issued and the snapshot operation begins, and time period 128 occurs after the snapshot has been created. The request for a snapshot operation is shown by the arrow 140 and different write requests are illustrated by the arrows 130 through 138. Responses to the write requests are illustrated by arrows 131, 133, 135, 137 and 139. As in FIG. 12, the three servers of the system 10 depicted FIG. 4 are shown by the vertical lines which are labeled server 161, 162 and 163 respectively.

The process 120 depicted by FIG. 13 illustrates the creation of a consistent distributed snapshot through the use of time stamps and synchronized system clocks. More particularly, the process 120 illustrates that the servers 161, 162 and 163 can receive a plurality of write requests, each of which can arrive at one of the respective servers at any particular time. This is shown in FIG. 13 by the write requests 130, 132 and 136 which occur during the time period 122. As further shown in FIG. 13 write request 134 may arrive during the time period 124 and write request 138 may arrive during the time period 128. Accordingly, the process 120 depicted in FIG. 13 is designed to handle write requests that can occur before, during and after the snapshot process.

The snapshot process begins when a snapshot request 140 is received by at least one of the servers 161, 162 and 163. FIG. 13 depicts snapshot request 140 being sent from an administrator to the server 162. Upon receipt of the snapshot request 140, the snapshot process operating on the server 162 may issue "prepare" commands to the other servers that are supporting the data volume for which the snapshot is being created. The prepare command is depicted by the arrows 142 which is sent from server 162 to the servers 161 and 163. Upon receipt of the prepare command, the servers 161 and 163 as well as server 162, prepare for a snapshot. In this case, requests that are still pending at the servers are allowed to proceed and can be acknowledged as soon as they finish, as it is not necessary to hold them pending. Instead the servers 161, 162 and 163 determine the time at which each such request was processed and time stamps each of the respective requests. In the example depicted by FIG. 13, this time stamping is done to write requests 136, 134 and 138, all of which are pending or received after the snapshot request 140 has been received by server 162. Once the coordinating server 162 receives a "ready" response from each of the servers 161 and 163, the coordinating server 162 generates a command to take a snapshot and transmits this command to the waiting servers 161 and 163. This command includes a time-stamp, which is the current time. This is illustrated in FIG. 13 by the arrows 160 and 162 that represent commands to the servers 161 and 163. When servers 161 and 163 receive this command, the servers include write requests with time stamps earlier than the time transmitted with the commands 161 and 162 in the snapshot. Write requests with time stamps later than the time stamp of the take snapshot commands 160 and 162 are not included in the generated snapshot. In the example depicted in FIG. 13 the write requests 136 and 134 are included within the generated snapshot while the write request 138 is not included within the generated snapshot. Once the snapshot information is generated, the process 120 may proceed as the process 70 described above with reference to FIG. 12.

The methods of the present invention may be performed in either hardware, software, or any combination thereof, as those terms are currently known in the art. In particular, the present methods may be carried out by software, firmware, or microcode operating on a computer or computers of any type. Additionally, software embodying the present invention may comprise computer instructions in any form (e.g., source code, object code, interpreted code, etc.) stored in any computer-readable medium (e.g., ROM, RAM, magnetic media, punched tape or card, compact disc (CD) in any form, DVD, etc.). Furthermore, such software may also be in the form of a computer data signal embodied in a carrier wave, such as that found within the well-known Web pages transferred among devices connected to the Internet. Accordingly, the present invention is not limited to any particular platform, unless specifically stated otherwise in the present disclosure.

Moreover, the depicted systems and methods may be constructed from conventional hardware systems and specially developed hardware is not necessary. For example, in the depicted systems, the clients can be any suitable computer system such as a PC workstation, a handheld computing device, a wireless communication device, or any other such device equipped with a network client hardware and or software capable of accessing a network server and interacting with the server to exchange information. Optionally, the client and the server may rely on an unsecured communication path for accessing services on the remote server. To add security to such a communication path, the client and the server can employ a security system, such the Secured Socket Layer (SSL) security mechanism, which provides a trusted path between a client and a server. Alternatively, they may employ another conventional security system that has been developed to provide to the remote user a secured channel for transmitting data over a network.

Furthermore, networks employed in the systems herein disclosed may include conventional and unconventional computer to computer communications systems now known or engineered in the future, such as but not limited to the Internet.

Servers may be supported by a commercially available server platform such as a Sun Microsystems, Inc. Sparc ™ system running a version of the UNIX operating system and running a server program capable of connecting with, or exchanging data with, clients.

Those skilled in the art will know, or be able to ascertain using no more than routine experimentation, many equivalents to the embodiments and practices described herein. For example, the processing or I/O capabilities of the servers 161, 162, 163 may not be the same, and the allocation process 220 will take this into account when making resource migration decisions. In addition, there may be several parameters that together constitute the measure of "load" in a system - network traffic, I/O request rates, as well as data access patterns (for example, whether the accesses are predominantly sequential or predominantly random). The allocation process 220 will take all these parameters into account as input to its migration decisions.

As discussed above, the invention disclosed herein can be realized as a software component operating on a conventional data processing system such as a UNIX workstation. In that embodiment, the short cut response mechanism can be implemented as a C language computer program, or a computer program written in any high level language including C++, C#, Pascal, FORTRAN, Java, or BASIC. Additionally, in an embodiment where microcontrollers or digital signal processors (DSPs) are employed, the short cut response mechanism can be realized as a computer program written in microcode or written in a high level language and compiled down to microcode that can be executed on the platform employed. The development of such code is known to those of skill in the art, and such techniques are set forth in Digital Signal Processing Applications with the TMS320 Family, Volumes I, II, and III, Texas Instruments (1990). Additionally, general techniques for high level programming are known, and set forth in, for example, Stephen G. Kochan, Programming in C, Hayden Publishing (1983).

While particular exemplary implementations of the present invention have been shown and described, it will be apparent to those skilled in the art that changes and modifications may be made without departing from this invention in its broader aspect and, therefore, the appended claims are to encompass within their scope all such changes and modifications.

## Claims

1. A system for providing a partitioned storage service, comprising:
at least two networked servers (161, 162, 163);
a plurality of resources (170, 180) partitioned across the at least two networked servers, such that a first subset of a resource is stored on a first server and a second subset of a resource is stored on a second server, with one of the first or second servers responsible for allowing access to the resource as a whole by networked clients (12);
at least one of the first and second servers maintaining a routing table (20A, 20B, 20C) indicating which of the first or second servers is responsible for which subset of a resource; and
at least two snapshot components (22A, 22B, 22C) operating on respective ones of the at least two networked servers and with the snapshot component operating on the first server holding data of at least the first subset of the partitioned resources being capable of coordinating with-at least one other snapshot component operating on the second server holding data of the second subset of the partitioned resources, for generating a snapshot of those portions of the partitioned resources maintained by its respective server, and for generating snapshot state information representative of the state of each of the -partitioned resources on each respective server, the snapshot state information being representative of a state of partitioned data maintained by each respective server, including at least information concerning a file structure of such data.

2. The system according to claim 1, wherein a coordinating component of said snapshot components includes a time-stamp component for time stamping a command to that coordinates with at least one other snapshot component.

3. The system according to claim 1, wherein the snapshot components include a request control component for processing requests received by the respective networked server.

4. The system according to claim 3, wherein the request control component includes a suspend component for suspending processing of requests by the respective networked server.

5. The system according to claim 3, wherein the request control component includes a time-stamp component for time stamping requests received by the respective networked server.

6. The system according to claim 1, wherein the snapshot components include a component for analyzing suspended requests to determine requests received after a selected time.

7. The system according to claim 1, further including an archive component for employing the state information to simultaneously create copies of a plurality of the resources partitioned across the at least two networked servers.

8. A storage area network, comprising a data network and systems according to any previous claim.

9. A method for providing a partitioned storage service, comprising the steps of:
providing at least two networked servers (161, 162, 163) and a plurality of resources (170, 180) partitioned across the at least two networked servers, such that a first subset of a resource is stored on a first server and a second subset of a resource is stored on a second server, with one of the first or second servers responsible for allowing access to the resource as a whole by networked clients (12);
maintaining, by at least one of the first and second servers, a routing table (20A, 20B, 20C) indicating which of the first or second servers is responsible for which subset of a resource; and
operating at least two snapshot processes (22A, 22B, 22C) on respective ones of the at least two networked servers and with the snapshot component operating on the first server holding data of at least the first subset of the partitioned resources being capable of coordinating with at least one other snapshot component operating on the second server holding data of the second subset of the partitioned resources, for generating a snapshot of those portions of the partitioned resources maintained by its respective server, and generating snapshot state information representative of the state of each of partitioned resources on each respective server, the snapshot state information being representative of a state of partitioned data maintained by each respective server, including at least information concerning a file structure of such data.

10. A method according to claim 9 further comprising:
providing an administration command to a first one of the snapshot processes directing the snapshot processes to generate state information representative of the state of at least one partitioned resource,
having the first snapshot process hold pending requests from network clients and direct at least a second snapshot process to hold pending network client requests,
having the second snapshot process to indicate that requests have been held, and
having the first snapshot process generate state information representative of the state of a partitioned resource maintained on its respective server and generate a snapshot command for the second server to generate information representative of the state of a partitioned resource maintained on its respective server.

11. A method according to claim 10, wherein the administration command includes a prepare command to a second network server supporting the partitioned resource for which a snapshot is being created.

12. A method according to claim 10, further comprising processing the state information to simultaneously create copies of a plurality of the resources partitioned across the at least two networked servers.

13. A method according to claim 10, further comprising having the first and second snapshot processes release pending requests after generating the state information.

## Patentansprüche

1. System zum Bereitstellen eines partitionierten Speicherdienstes, umfassend:
mindestens zwei vernetzte Server (161, 162, 163);
eine Vielzahl von Ressourcen (170, 180), die derart über die mindestens zwei vernetzten Server verteilt ist, dass eine erste Teilmenge einer Ressource auf einem ersten Server gespeichert ist und eine zweite Teilmenge einer Ressource auf einem zweiten Server gespeichert ist, wobei einer des ersten oder zweiten Servers für das Gewähren von Zugriff auf die Ressource als ein Ganzes durch vernetzte Clients (12) verantwortlich ist;
wobei mindestens einer des ersten und zweiten Servers eine Routing-Tabelle (20A, 20B, 20C) pflegt, die angibt, welcher des ersten oder zweiten Servers für welche Teilmenge einer Ressource verantwortlich ist; und
mindestens zwei Momentaufnahmekomponenten (22A, 22B, 22C), die auf jeweiligen der mindestens zwei vernetzten Server arbeiten und wobei die Momentaufnahmekomponente, die auf dem ersten Server arbeitet, der Daten von mindestens der ersten Teilmenge der partitionierten Ressourcen hält, in der Lage ist, sich mit mindestens einer anderen Momentaufnahmekomponente, die auf dem zweiten Server arbeitet, der Daten der zweiten Teilmenge der partitionierten Ressourcen hält, abzustimmen, um eine Momentaufnahme dieser Teile der partitionierten Ressourcen zu erzeugen, die durch ihren jeweiligen Server gepflegt werden, und um Momentaufnahmezustandsinformationen zu erzeugen, die den Zustand jeder der partitionierten Ressourcen auf jedem jeweiligen Server darstellen, wobei die Momentaufnahmezustandsinformationen einen Zustand partitionierter Daten darstellen, die durch jeden jeweiligen Server gepflegt werden, darunter mindestens Information bezüglich einer Dateistruktur derartiger Daten.

2. System nach Anspruch 1, wobei eine Abstimmungskomponente der Momentaufnahmekomponenten eine Zeitstempelkomponente zum Zeitstempeln eines Befehls beinhaltet, der sich mit mindestens einer anderen Momentaufnahmekomponente abstimmt.

3. System nach Anspruch 1, wobei die Momentaufnahmekomponente eine Anforderungssteuerkomponente zum Verarbeiten von Anforderungen beinhaltet, die durch den jeweiligen vernetzten Server empfangen werden.

4. System nach Anspruch 3, wobei die Anforderungssteuerkomponente eine Unterbrechungskomponente zum Unterbrechen der Verarbeitung von Anforderungen durch den jeweiligen vernetzten Server beinhaltet.

5. System nach Anspruch 3, wobei die Anforderungssteuerkomponente eine Zeitstempelkomponente zum Zeitstempeln von Anforderungen beinhaltet, die durch den jeweiligen vernetzten Server empfangen werden.

6. System nach Anspruch 1, wobei die Momentaufnahmekomponenten eine Komponente zum Analysieren Unterbrechungsanforderungen beinhalten, um Anforderungen zu bestimmen, die nach einer ausgewählten Zeit empfangen werden.

7. System nach Anspruch 1, ferner beinhaltend eine Archivkomponente zum Einsetzen der Zustandsinformationen zum gleichzeitigen Erzeugen von Kopien von einer Vielzahl der Ressourcen, die über die mindestens zwei vernetzten Server partitioniert ist.

8. Speichernetzwerk, umfassend ein Datennetzwerk und Systeme nach einem beliebigen vorhergehenden Anspruch.

9. Verfahren zum Bereitstellen eines partitionierten Speicherdienstes, welches die folgenden Schritte umfasst:
Bereitstellen von mindestens zwei vernetzten Servern (161, 162, 163) und einer Vielzahl von Ressourcen (170, 180), die derart über die mindestens zwei vernetzten Server verteilt ist, dass eine erste Teilmenge einer Ressource auf einem ersten Server gespeichert ist und eine zweite Teilmenge einer Ressource auf einem zweiten Server gespeichert ist, wobei einer des ersten oder zweiten Servers für das Gewähren von Zugriff auf die Ressource als ein Ganzes durch vernetzte Clients (12) verantwortlich ist;
Pflegen, durch mindestens einen des ersten und zweiten Servers, einer Routing-Tabelle (20A, 20B, 20C), die angibt, welcher des ersten oder zweiten Servers für welche Teilmenge einer Ressource verantwortlich ist; und
Betreiben von mindestens zwei Momentaufnahmeprozessen (22A, 22B, 22C) auf jeweiligen der mindestens zwei vernetzten Server und wobei die Momentaufnahmekomponente, die auf dem ersten Server arbeitet, der Daten von mindestens der ersten Teilmenge der partitionierten Ressourcen hält, in der Lage ist, sich mit mindestens einer anderen Momentaufnahmekomponente, die auf dem zweiten Server arbeitet, der Daten der zweiten Teilmenge der partitionierten Ressourcen hält, abzustimmen, um eine Momentaufnahme dieser Teile der partitionierten Ressourcen zu erzeugen, die durch ihren jeweiligen Server gepflegt werden, und um Momentaufnahmezustandsinformationen zu erzeugen, die den Zustand jeder der partitionierten Ressourcen auf jedem jeweiligen Server darstellen, wobei die Momentaufnahmezustandsinformationen einen Zustand partitionierter Daten darstellen, die durch jeden jeweiligen Server gepflegt werden, darunter mindestens Information bezüglich einer Dateistruktur derartiger Daten.

10. Verfahren nach Anspruch 9, ferner umfassend:
Bereitstellen eines Administrationsbefehls für einen ersten der Momentaufnahmeprozesse, welcher die Momentaufnahmeprozesse zum Erzeugen von Zustandsinformationen anleitet, die den Zustand mindestens einer partitionierten Ressource darstellen,
Haltenlassen durch den ersten Momentaufnahmeprozess von ausstehenden Anforderungen von Netzwerkclients und Anweisen mindestens eines zweiten Momentaufnahmeprozesses, ausstehende Netzwerkclientanforderungen zu halten,
Angebenlassen durch den zweiten Momentaufnahmeprozess, dass Anforderungen gehalten worden sind; und
Erzeugenlassen durch den ersten Momentaufnahmeprozess von Zustandsinformationen, die den Zustand einer partitionierten Ressource darstellen, die auf ihrem jeweiligen Server gepflegt wird, und Erzeugenlassen eines Momentaufnahmebefehls für den zweiten Server, um Informationen zu erzeugen, die den Zustand einer partitionierten Ressource darstellen, die auf ihrem jeweiligen Server gepflegt wird.

11. Verfahren nach Anspruch 10, wobei der Administrationsbefehl einen Vorbereitungsbefehl für einen zweiten Netzwerkserver beinhaltet, welcher die partitionierte Ressource unterstützt, für welche eine Momentaufnahme erzeugt wird.

12. Verfahren nach Anspruch 10, ferner umfassend Verarbeiten der Zustandsinformationen zum gleichzeitigen Erzeugen von Kopien einer Vielzahl der Ressourcen, die über die mindestens zwei vernetzten Server partitioniert ist.

13. Verfahren nach Anspruch 10, ferner umfassend Freigebenlassen durch den ersten und zweiten Momentaufnahmeprozess von ausstehenden Anforderungen nach dem Erzeugen der Zustandsinformationen.

## Revendications

1. Système de fourniture d'un service de stockage partitionné, comprenant :
au moins deux serveurs mis en réseau (161, 162, 163) ;
une pluralité de ressources (170, 180) partitionnées sur les au moins deux serveurs mis en réseau, de telle sorte qu'un premier sous-ensemble d'une ressource soit stocké sur un premier serveur et un second sous-ensemble d'une ressource soit stocké sur un second serveur, avec un des premier ou second serveurs responsable de l'autorisation d'accès à la ressource dans son intégralité par des clients mis en réseau (12) ;
au moins un des premier et second serveurs maintenant une table de routage (20A, 20B, 20C) indiquant lequel des premier ou second serveurs est responsable pour quel sous-ensemble d'une ressource ; et
au moins deux composants d'instantané (22A, 22B, 22C) fonctionnant sur un respectif des au moins deux serveurs mis en réseau et avec le composant d'instantané fonctionnant sur le premier serveur conservant des données d'au moins le premier sous-ensemble des ressources partitionnées étant capable de coordination avec au moins un autre composant d'instantané fonctionnant sur le second serveur conservant des données du second sous-ensemble des ressources partitionnées, pour la génération d'un instantané de ces parties des ressources partitionnées maintenues par son serveur respectif, et pour la génération d'informations d'état d'instantané représentatives de l'état de chacune des ressources partitionnées sur chaque serveur respectif, les informations d'état d'instantané étant représentatives d'un état de données partitionnées maintenues par chaque serveur respectif, notamment au moins des informations concernant une structure de fichier de telles données.

2. Système selon la revendication 1, dans lequel un composant de coordination desdits composants d'instantanés inclut un composant d'horodatage pour l'horodatage d'une commande sur ces coordonnées avec au moins un autre composant d'instantané.

3. Système selon la revendication 1, dans lequel les composants d'instantané incluent un composant de contrôle de requête pour le traitement de requêtes reçues par le serveur mis en réseau respectif.

4. Système selon la revendication 3, dans lequel le composant de contrôle de requête inclut un composant de suspension pour la suspension du traitement de requêtes par le serveur mis en réseau respectif.

5. Système selon la revendication 3, dans lequel le composant de contrôle de requête inclut un composant d'horodatage pour l'horodatage de requêtes reçues par le serveur mis en réseau respectif.

6. Système selon la revendication 1, dans lequel les composants d'instantané incluent un composant pour l'analyse de requêtes suspendues pour déterminer des requêtes reçues après une heure sélectionnée.

7. Système selon la revendication 1, incluant en outre un composant d'archivé pour l'utilisation des informations d'état pour créer simultanément des copies d'une pluralité des ressources partitionnées sur les au moins deux serveurs mis en réseau.

8. Réseau de zone de stockage, comprenant un réseau de données et des systèmes selon une quelconque revendication précédente.

9. Procédé de fourniture d'un service de stockage partitionné, comprenant les étapes consistant à :
fournir au moins deux serveurs mis en réseau (161, 162, 163) et une pluralité de ressources (170, 180) partitionnées sur les au moins deux serveurs mis en réseau, de telle sorte qu'un premier sous-ensemble d'une ressource soit stocké sur un premier serveur et un second sous-ensemble d'une ressource soit stocké sur un second serveur, avec un des premier ou second serveurs responsable de l'autorisation d'accès à la ressource dans son intégralité par des clients mis en réseau (12) ;
maintenir, par au moins un des premier et second serveurs, une table de routage (20A, 20B, 20C) indiquant lequel des premier ou second serveurs est responsable pour quel sous-ensemble d'une ressource ; et
utiliser au moins deux processus d'instantané (22A, 22B, 22C) sur un respectif des au moins deux serveurs mis en réseau et avec le composant d'instantané fonctionnant sur le premier serveur conservant des données d'au moins le premier sous-ensemble des ressources partitionnées étant capable de coordination avec au moins un autre composant d'instantané fonctionnant sur le second serveur conservant des données du second sous-ensemble des ressources partitionnées, pour la génération d'un instantané de ces parties des ressources partitionnées maintenues par son serveur respectif, et la génération d'informations d'état d'instantané représentatives de l'état de chacune des ressources partitionnées sur chaque serveur respectif, les informations d'état d'instantané étant représentatives d'un état de données partitionnées maintenues par chaque serveur respectif, notamment au moins des informations concernant une structure de fichier de telles données.

10. Procédé selon la revendication 9 comprenant en outre :
fourniture d'une commande d'administration à un premier des processus d'instantané amenant les processus d'instantané à générer des informations d'état représentatives de l'état d'au moins une ressource partitionnée,
le premier processus d'instantané conservant des requêtes en attente de clients réseau et amenant au moins un second processus d'instantané à conserver des requêtes client réseau en attente,
le second processus d'instantané indiquant que des requêtes ont été conservées, et
le premier processus d'instantané générant des informations d'état représentatives de l'état d'une ressource partitionnée maintenue sur son serveur respectif et générant une commande d'instantané pour le second serveur pour générer des informations représentatives de l'état d'une ressource partitionnée sur son serveur respectif.

11. Procédé selon la revendication 10, dans lequel la commande d'administration inclut une commande de préparation vers un second serveur réseau supportant la ressource partitionnée pour laquelle un instantané est créé.

12. Procédé selon la revendication 10, comprenant en outre le traitement des informations d'état pour créer simultanément des copies d'une pluralité des ressources partitionnées sur les au moins deux serveurs mis en réseau.

13. Procédé selon la revendication 10, comprenant en outre les premier et second processus d'instantané libérant des requêtes en attente après la génération des informations d'état.
